# EUROPEAN PATENT SPECIFICATION

(11) **EP 0 954 554 B1**
(45) Date of publication and mention of the grant of the patent: **20.08.2003**
(21) Application number: 97904038.3
(22) Date of filing: 23.01.1997
(51) Int. Cl.: C09K 5/04, C09K 3/30, C08J 9/14

(54) **COMPOSITIONS INCLUDING A HYDROFLUOROPROPANE**
ZUSAMMENSETZUNGEN ENTHALTEND HYDROFLOUR
COMPOSITIONS RENFERMANT UN HYDROFLUOROPROPANE

(43) Date of publication of application: 10.11.1999
(73) Proprietor: E.I. DU PONT DE NEMOURS AND COMPANY, Wilmington Delaware 19898 (US)
(72) Inventor: MINOR, Barbara, Haviland, Elkton, MD 21921-7619 (US)
(74) Representative: Matthews, Derek Peter
(86) International application number: US9701357
(87) International publication number: WO98032812

(56) References cited:
- WO-A-93/11201
- WO-A-94/02563
- WO-A-94/11460
- WO-A-95/08603
- WO-A-96/15206
- JOURNAL OF CHEMICAL AND ENGINEERING DATA, vol. 27, no. 3, pages 303-306, XP002040010 W.R.PARRISH ET AL.: "vapor-liquid equilibrium data for the propane/-, n-butane/-, isobutane/-, and propylene/isopropyl fluoride systems at 30 and 50°C"
- DATABASE WPI Section Ch, Week 9336 Derwent Publications Ltd., London, GB; Class A60, AN 93-285498 XP002040011 & JP 05 202 220 A (DAIKIN KOGYO KK) , 10 August 1993

## Description

### FIELD OF THE INVENTION

This invention relates to compositions that include a hydrofluoropropane. These compositions are useful as refrigerants, cleaning agents, expansion agents for polyolefins and polyurethanes, aerosol propellants, refrigerants, heat transfer media, gaseous dielectrics, fire extinguishing agents, power cycle working fluids, polymerization media, particulate removal fluids, carrier fluids, buffing abrasive agents, and displacement drying agents.

### BACKGROUND OF THE INVENTION

Fluorinated hydrocarbons have many uses, one of which is as a refrigerant. Such refrigerants include trichlorofluoromethane (CFC-11) and chlorodifluoromethane (HCFC-22).

In recent years it has been pointed out that certain kinds of fluorinated hydrocarbon refrigerants released into the atmosphere may adversely affect the stratospheric ozone layer. Although this proposition has not yet been completely established, there is a movement toward the control of the use and the production of certain chlorofluorocarbons (CFCs) and hydrochlorofluorocarbons (HCFCs) under an international agreement.

Accordingly, there is a demand for the development of refrigerants that have a lower ozone depletion potential than existing refrigerants while still achieving an acceptable performance in refrigeration applications. Hydrofluorocarbons (HFCs) have been suggested as replacements for CFCs and HCFCs since HFCs have no chlorine and therefore have zero ozone depletion potential.

In refrigeration applications, a refrigerant is often lost during operation through leaks in shaft seals, hose connections, soldered joints and broken lines. In addition, the refrigerant may be released to the atmosphere during maintenance procedures on refrigeration equipment. If the refrigerant is not a pure component or an azeotropic or azeotrope-like composition, the refrigerant composition may change when leaked or discharged to the atmosphere from the refrigeration equipment. The change in refrigerant composition may cause the refrigerant to become flammable or to have poor refrigeration performance.

Accordingly, it is desirable to use as a refrigerant a single fluorinated hydrocarbon or an azeotropic or azeotrope-like composition that includes one or more fluorinated hydrocarbons.

Fluorinated hydrocarbons may also be used as cleaning agents or solvent to clean, for example, electronic circuit boards. It is desirable that the cleaning agents be azeotropic or azeotrope-like because in vapor degreasing operations the cleaning agent is generally redistilled and reused for final rinse cleaning.

Azeotropic or azeotrope-like compositions that include a fluorinated hydrocarbon are also useful as blowing agents in the manufacture of closed-cell polyurethane, phenolic and thermoplastic foams, as propellants in aerosols, as heat transfer media, gaseous dielectrics, fire extinguishing agents or power cycle working fluids such as for heat pumps. These compositions may also be used as inert media for polymerization reactions, fluids for removing particulates from metal surfaces, as carrier fluids that may be used, for example, to place a fine film of lubricant on metal parts or as buffing abrasive agents to remove buffing abrasive compounds from polished surfaces such as metal. They are also used as displacement drying agents for removing water, such as from jewelry or metal parts, as resist developers in conventional circuit manufacturing techniques including chlorine-type developing agents, or as strippers for photoresists when used with, for example, a chlorohydrocarbon such as 1,1,1-trichloroethane or trichloroethylene.

Parrish *et al.* in J. Chem. Eng. Data **27**,303-306 (1982) disclose isopropyl fluoride/butane systems showing positive azeotropes, although only in the context of upgrading gasoline octane ratings and with no teaching of any aerosol propellant properties. WO 95/08603 relates to mixtures of hydrofluorocarbons and WO 94/11460 discloses refrigerant compositions comprising trifluoroethane. Refrigerant compositions comprising tetrafluoroethane are disclosed in WO 94/02563 and mixtures of pentafluoropropane and a fluorinated propane are the subject of WO 96/15206.

### SUMMARY OF THE INVENTION

The present invention relates to the discovery of certain compositions which include a first component of fluoropropane and a second component of a hydrocarbon. These compositions are useful as refrigerants, cleaning agents, expansion agents for polyolefins and polyurethanes, heat transfer media, gaseous dielectrics, fire extinguishing agents, power cycle working fluids, polymerization media, particulate removal fluids, carrier fluids, buffing abrasive agents, displacement drying agents and in particular as aerosol propellants.

Further, the invention relates to the discovery of certain binary azeotropic or azeotrope-like compositions comprising effective amounts of fluoropropane and a second component of a hydrocarbon, to form an azeotropic or azeotrope-like composition.

The invention further relates to the use of certain binary azeotropic or azeotrope-like compositions of fluoropropane and butane as aerosol propellants.

### BRIEF DESCRIPTION OF THE DRAWINGS

Figure 1 (comparative) is a graph of the vapor/liquid equilibrium curve for mixtures of HFC-281ea and butane;
Figure 2 (comparative) is a graph of the vapor/liquid equilibrium curve for mixtures of HFC-281ea and isobutane;
Figure 3 is a graph of the vapor/liquid equilibrium curve for mixtures of HFC-281fa and butane; and
Figure 4 is a graph of the vapor/liquid equilibrium curve for mixtures of HFC-281fa and isobutane.

### DETAILED DESCRIPTION

The present invention relates to certain of the following compositions and to uses of the following compositions:
(a) 2-fluoropropane (HFC-281ea) and butane; or HFC-281ea and isobutane; or
(b) 1-fluoropropane (HFC-281fa) and butane; HFC-281fa and isobutane.

Certain of the compositions are useful as refrigerants, cleaning agents, expansion agents for polyolefins and polyurethanes, refrigerants, heat transfer media, gaseous dielectrics, fire extinguishing agents, power cycle working fluids, polymerization media, particulate removal fluids, carrier fluids, buffing abrasive agents, and displacement drying agents and all are useful as aerosol propellants. Further, the present invention relates to the discovery of azeotropic or azeotrope-like compositions of effective amounts of certain of the above mixtures to form an azeotropic or azeotrope-like composition.

By "azeotropic" composition is meant a constant boiling liquid admixture of two or more substances that behaves as a single substance. One way to characterize an azeotropic composition is that the vapor produced by partial evaporation or distillation of the liquid has the same composition as the liquid from which it was evaporated or distilled, that is, the admixture distills/refluxes without compositional change. Constant boiling compositions are characterized as azeotropic because they exhibit either a maximum or minimum boiling point, as compared with that of the non-azeotropic mixtures of the same components.

By "azeotrope-like" composition is meant a constant boiling, or substantially constant boiling, liquid admixture of two or more substances that behaves as a single substance. One way to characterize an azeotrope-like composition is that the vapor produced by partial evaporation or distillation of the liquid has substantially the same composition as the liquid from which it was evaporated or distilled, that is, the admixture distills/refluxes without substantial composition change. Another way to characterize an azeotrope-like composition is that the bubble point vapor pressure and the dew point vapor pressure of the composition at a particular temperature are substantially the same.

It is recognized in the art that a composition is azeotrope-like if, after 50 weight percent of the composition is removed such as by evaporation or boiling off, the difference in vapor pressure between the original composition and the composition remaining after 50 weight percent of the original composition has been removed is less than about 10 percent, when measured in absolute units. By absolute units, it is meant measurements of pressure and, for example, psia, atmospheres, bars, torr, dynes per square centimeter, millimeters of mercury, inches of water and other equivalent terms well known in the art. If an azeotrope is present, there is no difference in vapor pressure between the original composition and the composition remaining after 50 weight percent of the original composition has been removed.

Therefore, included in this invention are compositions of effective amounts of:
HFC-281fa and butane; HFC-281fa and isobutane; such that after 50 weight percent of an original composition is evaporated or boiled off to produce a remaining composition, the difference in the vapor pressure between the original composition and the remaining composition is 10 percent or less.

For compositions that are azeotropic, there is usually some range of compositions around the azeotrope point that, for a maximum boiling azeotrope, have boiling points at a particular pressure higher than the pure components of the composition at that pressure and have vapor pressures at a particular temperature lower than the pure components of the composition at that temperature, and that, for a minimum boiling azeotrope, have boiling points at a particular pressure lower than the pure components of the composition at that pressure and have vapor pressures at a particular temperature higher than the pure components of the composition at that temperature. Boiling temperatures and vapor pressures above or below that of the pure components are caused by unexpected intermolecular forces between and among the molecules of the compositions, which can be a combination of repulsive and attractive forces such as van der Waals forces and hydrogen bonding.

The range of compositions that have a maximum or minimum boiling point at a particular pressure, or a maximum or minimum vapor pressure at a particular temperature, may or may not be coextensive with the range of compositions that have a change in vapor pressure of less than about 10% when 50 weight percent of the composition is evaporated. In those cases where the range of compositions that have maximum or minimum boiling temperatures at a particular pressure, or maximum or minimum vapor pressures at a particular temperature, are broader than the range of compositions that have a change in vapor pressure of less than about 10% when 50 weight percent of the composition is evaporated, the unexpected intermolecular forces are nonetheless believed important in that the refrigerant compositions having those forces that are not substantially constant boiling may exhibit unexpected increases in the capacity or efficiency versus the components of the refrigerant composition.

The components of the compositions used in this invention have the following vapor pressures at 25°C.

| **Components** | **PSIA** | **KPA** |
|---|---|---|
| HFC-281ea | 47.1 | 325 |
| HFC-281fa | 37.7 | 260 |
| butane | 35.2 | 243 |
| isobutane | 50.5 | 348 |

Substantially constant boiling, azeotropic or azeotrope-like compositions used in this invention comprise the following (all compositions are measured at 25°C):

| **Components** | **Weight Ranges (wt.%/wt.%)** |
|---|---|
| HFC-281ea/butane | 40-99/1-60 |
| HFC-281ea/isobutane | 20-99/1-80 |
| HFC-281fa/butane | 20-99/1-80 |
| HFC-281fa/isobutane | 10-99/1-90 |

For purposes of this invention, "effective amount" is defined as the amount of each component of the inventive compositions which, when combined, results in the formation of an azeotropic or azeotrope-like composition. This definition includes the amounts of each component, which amounts may vary depending on the pressure applied to the composition so long as the azeotropic or azeotrope-like compositions continue to exist at the different pressures, but with possible different boiling points.

Therefore, effective amount includes the amounts, such as may be expressed in weight percentages, of each component of the compositions of the instant invention which form azeotropic or azeotrope-like compositions at temperatures or pressures other than as described herein.

For the purposes of this discussion, azeotropic or constant-boiling is intended to mean also essentially azeotropic or essentially-constant boiling. In other words, included within the meaning of these terms are not only the true azeotropes described above, but also other compositions containing the same components in different proportions, which are true azeotropes at other temperatures and pressures, as well as those equivalent compositions which are part of the same azeotropic system and are azeotrope-like in their properties. As is well recognized in this art, there is a range of compositions which contain the same components as the azeotrope, which will not only exhibit essentially equivalent properties for refrigeration and other applications, but which will also exhibit essentially equivalent properties to the true azeotropic composition in terms of constant boiling characteristics or tendency not to segregate or fractionate on boiling.

It is possible to characterize, in effect, a constant boiling admixture which may appear under many guises, depending upon the conditions chosen, by any of several criteria;
* The composition can be defined as an azeotrope of A and B since the very term "azeotrope" is at once both definitive and limitative, and requires that effective amounts of A and B for this unique composition of matter which is a constant boiling composition.
* It is well known by those skilled in the art, that, at different pressures, the composition of a given azeotrope will vary at least to some degree, and changes in pressure will also change, at least to some degree, the boiling point temperature. Thus, an azeotrope of A, and B represents a unique type of relationship but with a variable composition which depends on temperature and/or pressure. Therefore, compositional ranges, rather than fixed compositions, are often used to define azeotropes.
* The composition can be defined as a particular weight percent relationship or mole percent relationship of A and B while recognizing that such specific values point out only one particular relationship and that in actuality, a series of such relationships, represented by A and B actually exist for a given azeotrope, varied by the influence of pressure.
* An azeotrope of A and B can be characterized by defining the compositions as an azeotrope characterized by a boiling point at a given pressure, thus giving identifying characteristics without unduly limiting the scope of the invention by a specific numerical composition, which is limited by and is only as accurate as the analytical equipment available.

The azeotrope or azeotrope-like compositions of the present invention can be prepared by any convenient method including mixing or combining the desired amounts. A preferred method is to weigh the desired component amounts and thereafter combine them in an appropriate container.

In particular, the invention relates to an azeotropic or azeotrope-like composition suitable for use as an aerosol propellant characterised in that said composition forms a binary azeotrope or azeotrope-like mixture having a vapor pressure at 25°C higher than that of either component and consists of;
a) 10-99 wt.% 1-fluoropropane and 1-90 wt.% isobutane, or
b) 20-99 wt.% 1-fluoropropane and 1-80 wt.% butane.
   The invention also relates to the use of an azeotropic or azeotrope-like composition as a propellant in a mixture with one or more aerosols characterised in that said composition forms a binary azeotrope or azeotrope-like mixture having a vapor pressure at 25°C higher than that of either component and consists of;
c) 10-99 wt.% 1-fluoropropane and 1-90 wt.% isobutane
d) 20-99 wt.% 1-fluoropropane and 1-80 wt.% butane
e) 20-99 wt.% 2-fluoropropane and 1-80 wt.% isobutane, or
f) 40-99 wt.% 2-fluoropropane and 1-60 wt.% butane.

Specific examples illustrating the invention are given below. Unless otherwise stated therein, all percentages are by weight. It is to be understood that these examples are merely illustrative and in no way are to be interpreted as limiting the scope of the invention.

### Example 1

### Phase Study

A phase study shows the following compositions are azeotropic, all at 25°C.

| **Composition No.** | | **Vapor Press psia (kPa)** | |
|---|---|---|---|
| HFC-281ea/butane | 87.4/12.6 | 47.4 | 327 |
| HFC-281ea/isobutane | 40.8/59.2 | 54.4 | 375 |
| HFC-281fa/butane | 53.8/46.2 | 42.6 | 294 |
| HFC-281fa/isobutane | 26.4/73.6 | 53.2 | 367 |

### EXAMPLE 2

### Impact of Vapor Leakage on Vapor Pressure at 25°C

A vessel is charged with an initial composition at 25°C, and the vapor pressure of the composition is measured. The composition is allowed to leak from the vessel, while the temperature is held constant at 25°C, until 50 weight percent of the initial composition is removed, at which time the vapor pressure of the composition remaining in the vessel is measured. The results are summarized below.

| **Refrigerant Composition** | **0 wt% Evaporated psia (kPa)** | | **50% wt% Evaporated psi (kPa)** | | **0% Change in Vapor Pressure** |
|---|---|---|---|---|---|
| HFC-281ea/butane (comparative) | | | | | |
| 87.4/12.6 | 47.4 | 327 | 47.4 | 327 | 0.0 |
| 99/1 | 47.2 | 325 | 47.2 | 325 | 0.0 |
| 60/40 | 46.3 | 319 | 46.0 | 317 | 0.6 |
| 40/60 | 44.3 | 305 | 43.3 | 299 | 2.3 |
| 20/80 | 40.9 | 282 | 39.3 | 271 | 3.9 |
| 1/99 | 35.6 | 245 | 35.4 | 244 | 0.6 |
| | | | | | |

| HFC-281ea/isobutane (comparative) | | | | | |
|---|---|---|---|---|---|
| 40.8/59.2 | 54.4 | 375 | 54.4 | 375 | 0.0 |
| 20/80 | 53.5 | 369 | 53.3 | 367 | 0.4 |
| 1/99 | 50.7 | 350 | 50.6 | 349 | 0.2 |
| 60/40 | 53.7 | 370 | 53.5 | 369 | 0.4 |
| 80/20 | 51.5 | 355 | 50.8 | 350 | 1.4 |
| 99/1 | 47.4 | 327 | 47.3 | 326 | 0.2 |
| | | | | | |

| HFC-281fa/butane | | | | | |
|---|---|---|---|---|---|
| 53.8/46.2 | 42.6 | 294 | 42.6 | 294 | 0.0 |
| 80/20 | 41.2 | 284 | 40.8 | 281 | 1.0 |
| 99/1 | 38.0 | 262 | 37.9 | 261 | 0.3 |
| 30/70 | 41.5 | 286 | 41.0 | 283 | 1.2 |
| 10/90 | 38.4 | 265 | 37.2 | 256 | 3.1 |
| 1/99 | 35.6 | 245 | 35.4 | 244 | 0.6 |
| | | | | | |

| HFC-281fa/isobutane | | | | | |
|---|---|---|---|---|---|
| 26.4/73.6 | 53.2 | 367 | 53.2 | 367 | 0.0 |
| 10/90 | 52.3 | 361 | 52.1 | 359 | 0.4 |
| 1/99 | 50.7 | 350 | 50.7 | 350 | 0.0 |
| 50/50 | 51.9 | 358 | 51.1 | 352 | 1.5 |
| 80/20 | 45.9 | 316 | 43.2 | 298 | 5.9 |
| 99/1 | 38.2 | 263 | 37.9 | 261 | 0.8 |

The results of this Example show that these compositions are azeotropic or azeotrope-like because when 50 wt.% of an original composition is removed, the vapor pressure of the remaining composition is within about 10% of the vapor pressure of the original composition, at a temperature of 25°C.

### EXAMPLE 3

### Refrigerant Performance

The following table shows the performance of various refrigerants. The data are based on the following conditions.
Evaporator temperature 45°F (7.0°C)
Condenser temperature 130°F (54.0°C)
Return gas temperature 65°F (18.0°C)
Subcool temperature 15°F (-9.0°C)
Compressor efficiency is 75%.

| **Refrig. Comp.** | **Evap. Press. Psia (kPa)** | | **Cond. Press. Psia (kPa)** | | **Comp. Dis. Temp. °F (°C)** | | **COP** | | **Capacity BTU/min (kw)** |
|---|---|---|---|---|---|---|---|---|---|
| HFC-281ea/butane (comparative) | | | | | | | | | |
| 1/99 | 19.6 | 135 | 80.9 | 558 | 155.3 | 68.5 | 3.66 | 90.1 | 1.6 |
| 99/1 | 26.5 | 183 | 104.6 | 721 | 167.9 | 75.5 | 3.69 | 120.3 | 2.1 |
| | | | | | | | | | |

| HFC-281ea/isobutane (comparative) | | | | | | | | | |
|---|---|---|---|---|---|---|---|---|---|
| 1/99 | 29.1 | 201 | 110.3 | 760 | 152.2 | 66.8 | 3.56 | 121.0 | 2.1 |
| 99/1 | 26.6 | 183 | 105.2 | 725 | 167.8 | 75.4 | 3.69 | 120.8 | 2.1 |
| | | | | | | | | | |

| HFC-281fa/butane | | | | | | | | | |
|---|---|---|---|---|---|---|---|---|---|
| 1/99 | 19.6 | 135 | 80.7 | 556 | 155.3 | 68.5 | 3.66 | 90.1 | 1.6 |
| 99/1 | 20.7 | 143 | 86.5 | 596 | 169.3 | 76.3 | 3.73 | 99.2 | 1.7 |
| | | | | | | | | | |

| HFC-281fa/isobutane | | | | | | | | | |
|---|---|---|---|---|---|---|---|---|---|
| 1/99 | 29.0 | 200 | 110.1 | 759 | 152.2 | 66.8 | 3.56 | 120.8 | 2.1 |
| 99/1 | 20.8 | 143 | 87.1 | 601 | 169.4 | 76.3 | 3.72 | 99.6 | 1.8 |

### EXAMPLE 4

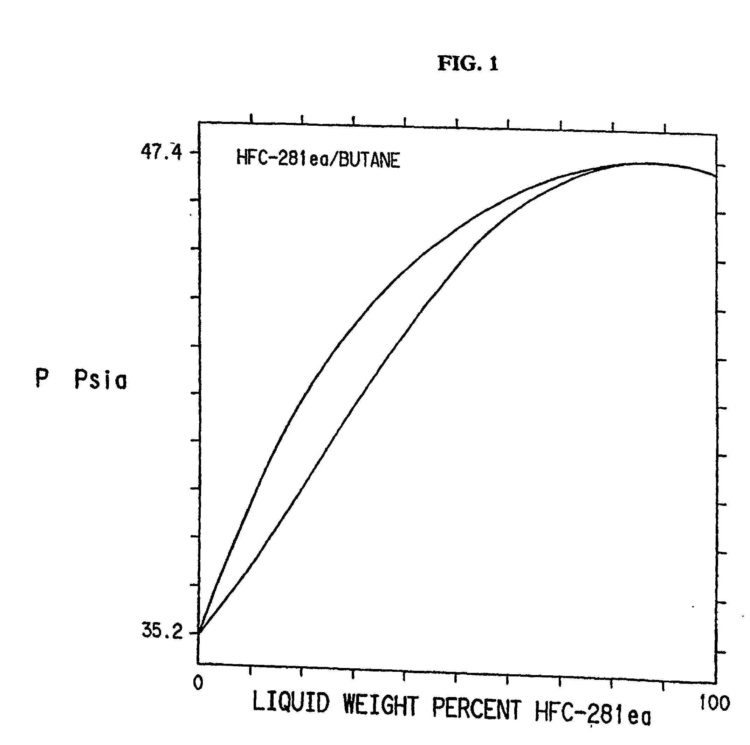

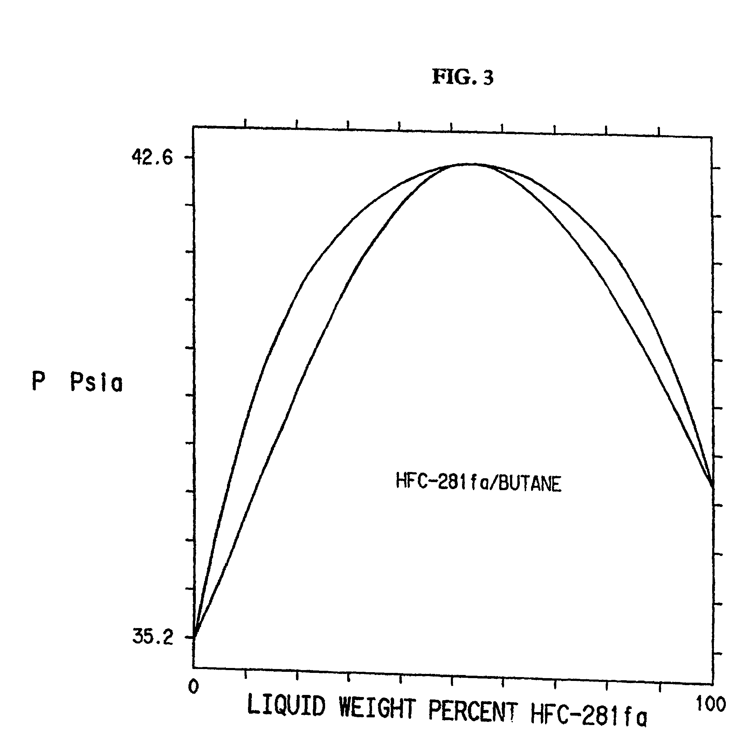

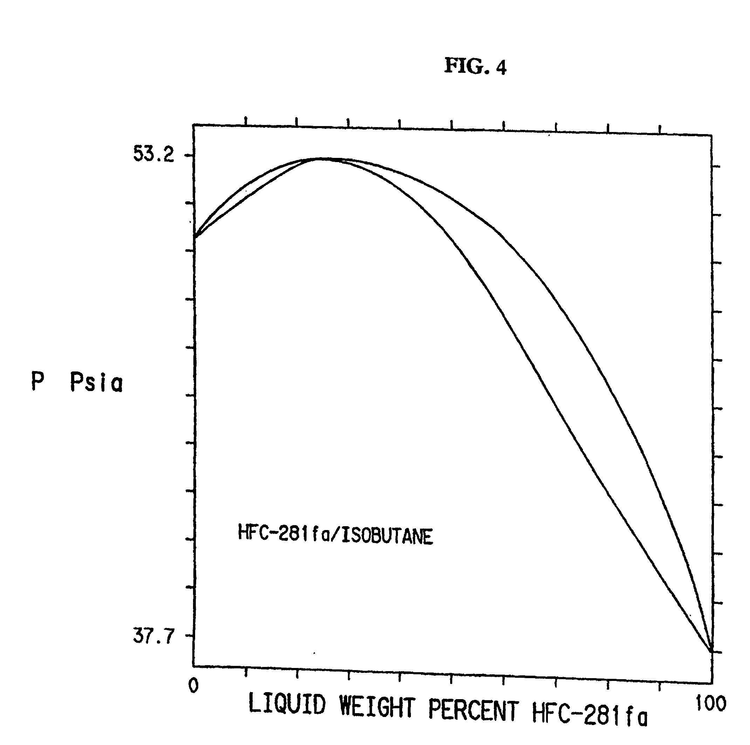

This Example is directed to measurements of the liquid/vapor equilibrium curves for the mixtures in Figures 1-4.

Turning to Figure 1, the upper curve represents the composition of the liquid, and the lower curve represents the composition of the vapor.

The data for the compositions of the liquid in Figure 1 are obtained as follows. A stainless steel cylinder is evacuated, and a weighed amount of HFC-281ea is added to the cylinder. The cylinder is cooled to reduce the vapor pressure of HFC-281ea, and then a weighed amount of butane is added to the cylinder. The cylinder is agitated to mix the HFC-281ea and butane, and then the cylinder is placed in a constant temperature bath until the temperature comes to equilibrium at 25°C, at which time the vapor pressure of the HFC-281ea and butane in the cylinder is measured. Additional samples of liquid are measured the same way, and the results are plotted in Figure 1.

The curve which shows the composition of the vapor is calculated using an ideal gas equation of state.

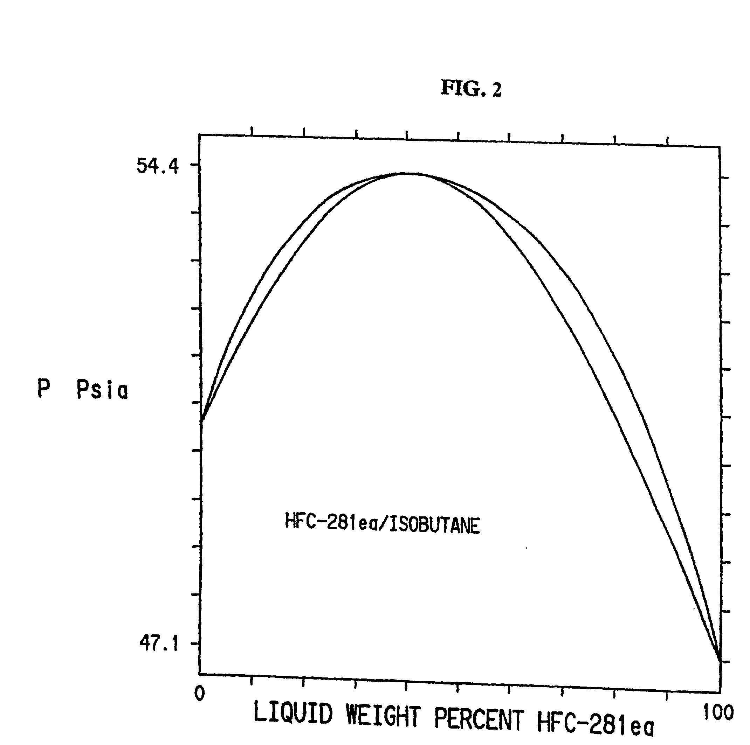

Vapor/liquid equilibrium data are obtained in the same way for the mixtures shown in Figures 2-4.

The data in Figures 1-4 show that at 25°C, there are ranges of compositions that have vapor pressures higher than the vapor pressures of the pure components of the composition at that same temperature. As stated earlier, the higher than expected pressures of these compositions may result in an unexpected increase in the refrigeration capacity and efficiency for these compositions versus the pure components of the compositions.

The novel compositions of this invention, which are azeotropic or azeotrope-like compositions, may be used to produce refrigeration by condensing the compositions and thereafter evaporating the condensate in the vicinity of a body to be cooled. The novel compositions may also be used to produce heat by condensing the refrigerant in the vicinity of the body to be heated and thereafter evaporating the refrigerant.

In addition to refrigeration applications, the novel constant boiling or substantially constant boiling compositions of the invention are also useful as aerosol propellants, heat transfer media, gaseous dielectrics, fire extinguishing agents, expansion agents for polyolefins and polyurethanes and power cycle working fluids.

## Claims

1. The use of an azeotropic or azeotrope-like composition (after 50 weight percent of the composition is removed such as by evaporation or boiling off, the difference in vapor pressure between the original composition and the composition remaining after 50 weight percent of the original composition has been removed is less than 10 percent, when measured in absolute units) as a propellant in a mixture with one or more aerosols **characterised in that** said composition forms a binary azeotrope or azeotrope-like mixture having a vapor pressure at 25°C higher than that of either component and consists of;
a) 10-99 wt.% 1-fluoropropane and 1-90 wt.% isobutane,
b) 20-99 wt.% 1-fluoropropane and 1-80 wt.% butane,
c) 20-99 wt.% 2-fluoropropane and 1-80 wt.% isobutane,or
d) 40-99 wt.% 2-fluoropropane and 1-60 wt.% butane.

2. The use of a composition as claimed in claim 1 wherein said composition consists of 10-99 wt.% 1-fluoropropane and 1-90 wt.% isobutane.

3. The use of a composition as claimed in claim 1 wherein said composition consists of 20-99 wt.% 1-fluoropropane and 1-80 wt.% butane.

4. The use of a composition as claimed in claim 1 wherein said composition consists of 20-99 wt.% 2-fluoropropane and 1-80 wt.% isobutane.

5. The use of a composition as claimed in claim 1 wherein said composition consists of 40-99 wt.% 2-fluoropropane and 1-60 wt.% butane.

6. An azeotropic or azeotrope-like composition (after 50 weight percent of the composition is removed such as by evaporation or boiling off, the difference in vapor pressure between the original composition and the composition remaining after 50 weight percent of the original composition has been removed is less than 10 percent, when measured in absolute units) suitable for use as an aerosol propellant **characterised in that** said composition forms a binary azeotrope or azeotrope-like mixture having a vapor pressure at 25°C higher than that of either component and consists of;
a) 10-99 wt.% 1-fluoropropane and 1-90 wt.% isobutane,or
b) 20-99 wt.% 1-fluoropropane and 1-80 wt.% butane.

7. A composition as claimed in claim 6 consisting of 10-99 wt.% 1-fluoropropane and 1-90 wt.% isobutane.

8. A composition as claimed in claim 6 consisting of 20-99 wt.% 1-fluoropropane and 1-80 wt.% butane.

9. A composition as claimed in claim 6 consisting essentially of 26.4 wt.% 1-fluoropropane and 73.6 wt.% isobutane.

10. A composition as claimed in claim 6 consisting essentially of 53.8 wt.% 1-fluoropropane and 46.2 wt.% butane.

## Patentansprüche

1. Verwendung einer azeotropen oder azeotropähnlichen Zusammensetzung, (nachdem 50 Gew.% der Zusammensetzung entfernt worden sind, beispielsweise durch Abdampfen oder Sieden, wobei die Differenz im Dampfdruck zwischen der ursprünglichen Zusammensetzung und der Zusammensetzung, nachdem 50 Gew.% der ursprünglichen Zusammensetzung entfernt worden sind, gemessen in absoluten Einheiten weniger als 10% beträgt) als ein Treibmittel in einer Mischung mit einem oder mehreren Aerosolen,
**dadurch gekennzeichnet, dass** die Zusammensetzung eine binäre azeotrope oder Azeotrop-ähnliche Mischung bildet, die einen Dampfdruck bei 25°C hat, der größer ist als eine der Komponenten, und die besteht aus:
a) mit 10% bis 99 Gew.% 1-Fluorpropan und 1% bis 90 Gew.% Isobutan,
b) mit 20% bis 99 Gew.% 1-Fluorpropan und 1% bis 80 Gew.% Butan,
c) mit 20% bis 99 Gew.% 2-Fluorpropan und 1% bis 80 Gew.% Isobutan, oder
d) mit 40% bis 99 Gew.% 2-Fluorpropan und 1% bis 60 Gew.% Butan.

2. Verwendung einer Zusammensetzung nach Anspruch 1, wobei die Zusammensetzung aus 10% bis 99 Gew.% 1-Fluorpropan und 1% bis 90 Gew.% Isobutan besteht.

3. Verwendung einer Zusammensetzung nach Anspruch 1, wobei die Zusammensetzung aus 20% bis 99 Gew.% 1-Fluorpropan und 1% bis 80 Gew.% Butan besteht.

4. Verwendung einer Zusammensetzung nach Anspruch 1, wobei die Zusammensetzung aus 20% bis 99 Gew.% 2-Fluorpropan und 1% bis 80 Gew.% Isobutan besteht.

5. Verwendung einer Zusammensetzung nach Anspruch 1, wobei die Zusammensetzung aus 40% bis 99 Gew.% 2-Fluorpropan und 1% bis 60 Gew.% Butan besteht.

6. Azeotrope oder Azeotrop-ähnliche Zusammensetzung (nachdem 50 Gew.% der Zusammensetzung entfernt worden sind, beispielsweise durch Abdampfen oder Sieden, wobei die Differenz im Dampfdruck zwischen der ursprünglichen Zusammensetzung und der Zusammensetzung, nachdem 50 Gew.% der ursprünglichen Zusammensetzung entfernt worden sind, gemessen in absoluten Einheiten weniger als 10% beträgt), die zur Verwendung als ein Aerosol-Treibmittel geeignet ist, **dadurch gekennzeichnet, dass** die Zusammensetzung eine binäre azeotrope oder Azeotrop-ähnliche Mischung bildet, die einen Dampfdruck bei 25°C hat, der größer ist als der einer der Komponenten, und die besteht aus:
a) mit 10% bis 99 Gew.% 1-Fluorpropan und 1% bis 90 Gew.% Isobutan, oder
b) mit 20% bis 99 Gew.% 1-Fluorpropan und 1% bis 80 Gew.% Butan.

7. Zusammensetzung nach Anspruch 6, bestehend aus 10% bis 99 Gew.% 1-Fluorpropan und 1% bis 90 Gew.% Isobutan.

8. Zusammensetzung nach Anspruch 6, bestehend aus 20% bis 99 Gew.% 1-Fluorpropan und 1% bis 80 Gew.% Butan.

9. Zusammensetzung nach Anspruch 6, bestehend aus 26,4 Gew.% 1-Fluorpropan und 73,6 Gew.% Isobutan.

10. Zusammensetzung nach Anspruch 6, bestehend aus 53,8 Gew.% 1-Fluorpropan und 46,2 Gew.% Butan.

## Revendications

1. Utilisation d'une composition azéotrope ou de type azéotrope (après élimination de 50 pour cent en poids de la composition comme par évaporation ou par ébullition, la différence de tension de vapeur entre la composition originale et la composition restante après élimination de 50 pour cent en poids de la composition originale est inférieure à 10 pour cent, quand elle est mesurée en unités absolues) comme gaz propulseur dans un mélange avec un ou plusieurs aérosols **caractérisée en ce que** ladite composition forme un mélange binaire azéotrope ou de type azéotrope ayant une tension de vapeur à 25°C plus élevée que celle de l'un ou l'autre composant et consiste en :
a) 10-99% en poids de 1-fluoropropane et 1-90% en poids d'isobutane,
b) 20-99% en poids de 1-fluoropropane et 1-80% en poids de butane,
c) 20-99% en poids de 2-fluoropropane et 1-80% en poids d'isobutane, ou
d) 40-99% en poids de 2-fluoropropane et 1-60% en poids de butane.

2. Utilisation d'une composition selon la revendication 1 dans laquelle ladite composition consiste en 10-99% en poids de 1-fluoropropane et 1-90% en poids d'isobutane.

3. Utilisation d'une composition selon la revendication 1 dans laquelle ladite composition consiste en 20-99% en poids de 1-fluoropropane et 1-80% en poids de butane.

4. Utilisation d'une composition selon la revendication 1 dans laquelle ladite composition consiste en 20-99% en poids de 2-fluoropropane et 1-80% en poids d'isobutane.

5. Utilisation d'une composition selon la revendication 1 dans laquelle ladite composition consiste en 40-99% en poids de 2-fluoropropane et 1-60% en poids de butane.

6. Composition azéotrope ou de type azéotrope (après élimination de 50 pour cent en poids de la composition comme par évaporation ou par ébullition, la différence de tension de vapeur entre la composition originale et la composition restante après élimination de 50 pour cent en poids de la composition originale est inférieure à 10 pour cent, quand elle est mesurée en unités absolues) appropriée pour l'utilisation comme gaz propulseur d'aérosol **caractérisée en ce que** ladite composition forme un mélange binaire azéotrope ou de type azéotrope ayant une tension de vapeur à 25°C plus élevée que celle de l'un ou l'autre composant et consiste en :
a) 10-99% en poids de 1-fluoropropane et 1-90% en poids d'isobutane, ou
b) 20-99% en poids de 1-fluoropropane et 1-80% en poids de butane.

7. Composition selon la revendication 6 consistant en 10-99% en poids de 1-fluoropropane et 1-90% en poids d'isobutane.

8. Composition selon la revendication 6 consistant en 20-99% en poids de 1-fluoropropane et 1-80% en poids de butane.

9. Composition selon la revendication 6 consistant essentiellement en 26,4% en poids de 1-fluoropropane et 73,6% en poids d'isobutane.

10. Composition selon la revendication 6 consistant essentiellement en 53,8% en poids de 1-fluoropropane et 46,2% en poids de butane.
